# EUROPEAN PATENT SPECIFICATION

(11) **EP 2 767 704 B1**
(45) Date of publication and mention of the grant of the patent: **15.11.2017**
(21) Application number: 13185457.2
(22) Date of filing: 20.09.2013
(51) Int. Cl.: F02M 21/02

(54) **System for supplying liquefied natural gas fuel**
System zur Zufuhr von verflüssigtem Erdgaskraftstoff
Système d'alimentation en carburant de gaz naturel liquéfié

(30) Priority: 19.02.2013 KR 20130017684
(43) Date of publication of application: 20.08.2014
(73) Proprietor: Hyundai Heavy Industries Co., Ltd., Ulsan 682-792 (KR)
(72) Inventor: Choi, Chul, Ulsan (KR); Kim, Ki Hong, Busan (KR); Chang, Kwang Pil, Ulsan (KR); Baek, Eun Sung, Ulsan (KR); Han, Ju Seog, Ulsan (KR)
(74) Representative: Betten & Resch

(56) References cited:
- EP-A1- 1 990 272
- EP-A2- 1 956 285
- WO-A1-2011/078689
- WO-A1-2012/080619

## Description

### BACKGROUND

The present invention relates to a system for supplying LNG fuel.

A ship is a transport vehicle for sailing across the ocean, carrying bulk of minerals, crude oil, natural gas, several thousands of containers, etc. A ship is made of steel and moves by propulsion generated through the rotation of a propeller when it is floating on a water plane by buoyancy.

A ship generates propulsion by driving an engine. The engine moves a piston using a gasoline or diesel and rotates a crankshaft by a reciprocating motion performed by the piston, so that a shaft connected to the crankshaft rotates to drive the propeller.

However, recently, a Liquefied Natural Gas (LNG) carrier is using LNG fuel supplying method of driving an engine using LNG as a fuel. This LNG fuel supplying method has also been used in other ships in addition to the LNG carrier.

It is generally known that LNG is clean fuel and LNG deposits are greater than oil reserves. LNG consumption has surged with development of a mining technique and a transporting technique. Methane, which is the main component of LNG, is generally kept in a liquid state at a temperature of -162°C or less under 1 atmospheric pressure. The volume of the liquefied methane is approximately 1/600 of that of methane in a gaseous state as the standard state, and the specific gravity of the liquefied methane is 0.42, which is about half of the specific gravity of the crude oil.

However, the temperature and the pressure, etc. for driving the engine may be different from the state of LNG stored in a tank. Accordingly, research and development of a technique for supplying LNG to an engine by controlling the temperature and the pressure, etc. of the stored LNG in a liquid state has continued. EP 1 956 285 A2 discloses an LNG fuel supply system wherein LNG is pressurised in a pump and then passed through a heat exchanger, exchanging heat with boil-off gas. The LNG is then compressed to a supercritical state.

WO 2011/078689 A1 describes a fuel supply system for LNG including a pump where the LNG is pressurised to a supercritical state and a heat exchanger. The heat exchanger transfers heat from the boil-off gas to the LNG.

EP 1 990 272 A1 shows another fuel supply system for LNG with a pump and a heat exchanger, exchanging heat between the LNG and boil-off gas.

### SUMMARY OF THE INVENTION

An LNG fuel supply system according to the invention phase changes LNG in a liquid state to LNG in a supercooled liquid state by compressing the LNG at a high pressure by a pump, so that energy transferred to the LNG by the pump is intensively usable for increasing a pressure of the LNG, not for increasing a temperature of the LNG when the pressure of the LNG is increased to a pressure demanded by an engine, thereby decreasing the amount of electric energy used for driving the pump.

Further, the LNG fuel supply system heats LNG in a supercooled liquid state at a combustion temperature demanded by an engine through a heat exchanger using surplus energy, which is easily obtainable from waste heat generated in various equipment including a boiler, as a heat source, thereby improving energy use efficiency of a ship.

The present invention provides an LNG fuel supply system, including: a fuel supply line connected from an LNG storing tank to an engine; a pump provided on the fuel supply line, and configured to compress LNG discharged from the LNG storing tank at a high pressure; and a heat exchanger provided on the fuel supply line between the engine and the pump, and configured to heat the LNG supplied from the pump.

The pump may phase change the LNG discharged from the LNG storing tank to the LNG in the supercooled liquid state having a higher pressure than a critical pressure and a lower temperature than a critical temperature.

The pump may include a high pressure pump compressing the LNG discharged from the LNG storing tank at 200 bar to 400 bar.

The pump may further include a boosting pump provided on the fuel supply line between the LNG storing tank and the high pressure pump, and configured to pressurize the LNG discharged from the LNG storing tank and supply the pressurized LNG to the high pressure pump.

The boosting pump may pressurize the LNG discharged from the LNG storing tank at 1 bar to 25 bar.

The heat exchanger may heat the LNG so that a temperature of the LNG reaches a first predetermined temperature while maintaining a pressure of the LNG discharged from the pump at 200 bar to 400 bar, and the first predetermined temperature is a temperature relatively higher than a critical temperature.

The first predetermined temperature may be a combustion temperature demanded by the engine.

The first predetermined temperature may be 40°C to 60°C.

According to the LNG fuel supply system according to the invention, when the LNG in the liquid state stored in the LNG storing tank is increased to have a pressure demanded by the engine by using the pump, the LNG in the liquid state is phase changed to the LNG in the supercooled liquid state, thereby maximally preventing the energy of the pump from being wasted for increasing the temperature of the LNG and thus decreasing the amount of electric energy consumed of the pump.

Further, according to the LNG fuel supply system according to the invention, the LNG in the supercooled liquid state is phase changed to the LNG in the supercritical state by heating the LNG in the supercooled liquid state by using the heat exchanger and then the phase changed LNG is supplied to the engine, so that it is possible to decrease a use rate of electric energy and improve a use rate of heat energy easily obtainable in a ship.

Further, according to the LNG fuel supply system of the invention, it is possible to improve energy use efficiency of a ship by decreasing a use rate of electric energy and increasing a use rate of heat energy.

The invention is defined by the appended claims. Further aspects, embodiments, and features will become apparent by reference to the drawings and the following detailed description.

### BRIEF DESCRIPTION OF THE DRAWINGS

The above and other features and advantages of the present invention will become more apparent to those of ordinary skill in the art by describing in detail embodiments thereof with reference to the attached drawings in which:
FIG. 1 is a conceptual view of an LNG fuel supply system according to an embodiment of the present invention;
FIG. 2 is a cross-sectional view of an LNG storing tank in the LNG fuel supply system according to the embodiment of the present invention;
FIG. 3 is an LNG phase change graph for describing a phase change of the LNG in the LNG fuel supply system according to the embodiment of the present invention;
FIG. 4 is an LNG phase change graph for describing a phase change of the LNG in the LNG fuel supply system according to another embodiment of the present invention; and
FIG. 5 is a graph for describing an energy use rate in the LNG fuel supply system according to another embodiment of the present invention.

### DETAILED DESCRIPTION

Hereinafter, an exemplary embodiment of the present invention will be described in detail with reference to the accompanying drawings.

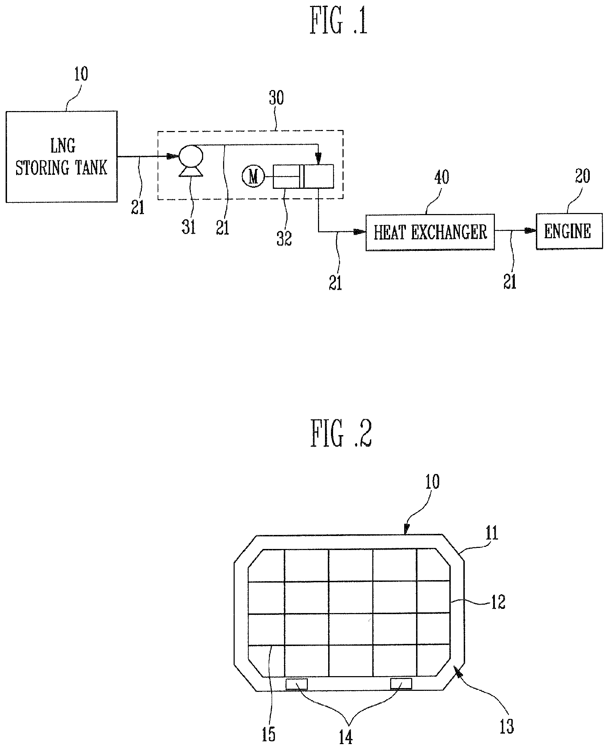

FIG. 1 is a conceptual diagram illustrating an LNG fuel supply system according to an embodiment of the present invention, and FIG. 2 is a cross-sectional view of an LNG storing tank in the LNG fuel supply system according to the embodiment of the present invention.

As illustrated in FIGS. 1 and 2, the LNG fuel supply system 1 according to the embodiment of the present invention includes an LNG storing tank 10, an engine 20, a pump 30, and a heat exchanger 40.

The LNG storing tank 10 stores LNG to be supplied to the engine 20. The LNG storing tank 10 needs to store the LNG in a liquid state, and in this case, the LNG storing tank 10 may have a form of a pressure tank. Hereinafter, in the present specification, the LNG may be used as a meaning including Natural Gas (NG) in a supercritical state, as well as NG in a liquefied state for convenience.

As illustrated in FIG. 2, the LNG storing tank 10 includes an outer tank 11, an inner tank 12, and an adiabatic section 13. The outer tank 11, which has a structure forming an exterior wall of the LNG storing tank 10, may be formed of steel, and a cross section thereof may be a polygonal shape.

The inner tank 12 is provided inside the outer tank 11, and may be installed while being supported to the inside of the outer tank 11 by supports 14. In this case, the support 14 may be provided at a lower end of the inner tank 12, and may be provided at a side surface of the inner tank 12 in order to restrict a left and right flow of the inner tank 12.

The inner tank 12 may be formed of stainless, and may be designed so as to endure a pressure of 5 bar to 10 bar (e.g., 6 bar). Since an internal pressure of the inner tank 12 may be increased according to evaporation of the LNG stored inside the inner tank 12 and the generation of evaporation gas, the inner tank 12 is designed so as to endure a predetermined pressure.

A baffle 15 may be provided inside the inner tank 12. The baffle 15 means a lattice-shaped plate, and a pressure inside the inner tank 12 is evenly distributed according to an installation of the baffle 15, so that it is possible to prevent a part of the inner tank 12 from intensively receiving the pressure.

The adiabatic section 13 is provided between the inner tank 12 and the outer tank 11, and may prevent external heat energy from being transferred to the inner tank 12. In this case, the adiabatic section 13 may be in a vacuum state. When the adiabatic section 13 is formed to be in the vacuum state, the LNG storing tank 10 may more efficiently endure a high pressure compared to a general tank. For example, the LNG storing tank 10 may endure a pressure of 5 bar to 20 bar through the vacuum adiabatic section 13.

As described above, in the present embodiment, the pressure tank-type LNG storing tank 10 including the vacuum adiabatic section 13 provided between the outer tank 11 and the inner tank 12 is used, so that it is possible to minimize a generation of evaporation gas, and it is possible to prevent an occurrence of a problem, such as damage to the LNG storing tank 10 even though the internal pressure is increased.

The engine 20 is driven with the LNG supplied from the LNG storing tank 10 to generate impellent force. In this case, the engine 20 may be an MEGI engine, and may also be a dual fuel engine.

In a case where the engine 20 is a dual fuel engine, the LNG or oil may be selectively supplied, and the LNG and the oil may not be mixed and supplied. The reason is to prevent deterioration of efficiency of the engine 20 by preventing two materials having different combustion temperatures from being mixed and supplied.

In the engine 20, according to a reciprocation of a piston (not shown) inside a cylinder (not shown) by the combustion of the LNG, a crank shaft connected to the piston may be rotated, and a shaft (not shown) connected to the crank shaft may be rotated. Accordingly, when the engine 20 is driven, a propeller (not shown) connected to the shaft is finally rotated, so that a ship moves forward or backward.

It is matter of course that in the present embodiment, the engine 20 may be the engine 20 for driving the propeller, but may be the engine 20 for generating power or the engine for generating other power. That is, in the present embodiment, the type of engine 20 is not specially limited. However, the engine 20 may be an internal combustion engine generating driving force by combustion of the LNG.

A fuel supply line 21 transferring the LNG may be installed between the LNG storing tank 10 and the engine 20, and the pump 30, the heat exchanger 40, and the like are provided at the fuel supply line 21, so that the LNG may be supplied to the engine 20.

In this case, a fuel supply valve (not shown) is installed at the fuel supply line 21, so that the amount of LNG supplied may be adjusted according to opening and closing of the fuel supply valve.

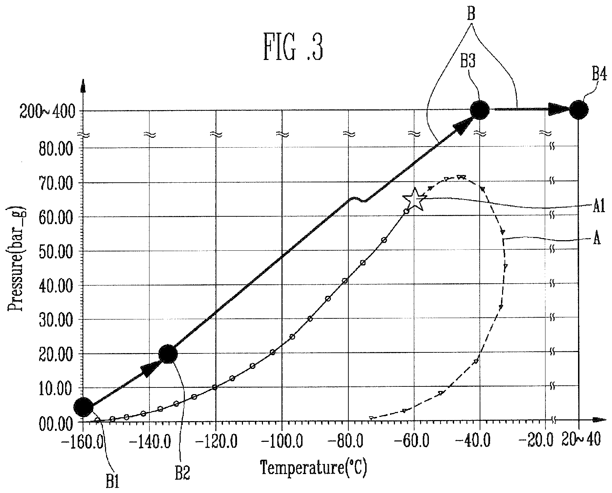

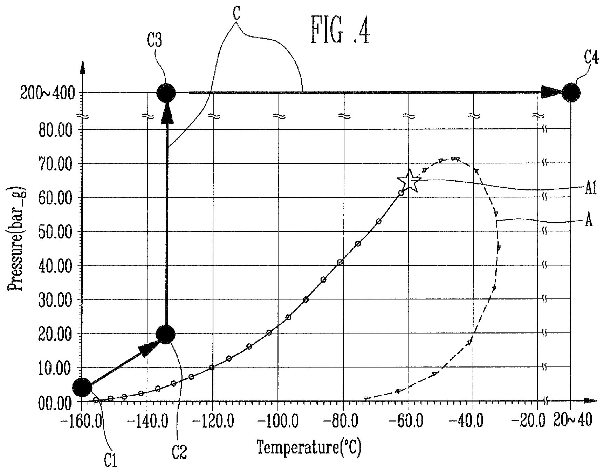

The pump 30 includes a boosting pump 31 and a high pressure pump 32. Hereinafter, the present invention will be described in detail with reference to FIGs. 3 and 4.

FIG. 3 is an LNG phase change graph for describing a phase change of the LNG in the LNG fuel supply system according to the embodiment of the present invention, and FIG. 4 is an LNG phase change graph for describing a phase change of the LNG in the LNG fuel supply system according to another embodiment of the present invention.

The boosting pump 31 may be provided inside the fuel supply line 21 between the LNG storing tank 19 and the high pressure pump 32 or in the LNG storing tank 10, and supplies the sufficient amount of LNG to the high pressure pump 32 to prevent cavitation of the high pressure pump 32. Further, the boosting pump 31 may take out the LNG from the LNG storing tank 10 and pressurize the LNG with several to several tens of bar, and the LNG passing through the boosting pump 31 may be pressurized at 1bar to 25 bar.

Referring to FIGS. 3 and 4, the LNG stored in the LNG storing tank 10 is in state B1 or C1, which is a liquid state. In this case, the boosting pump 31 may change the state of the LNG to state B2 or C2 by pressurizing the LNG discharge from the LNG storing tank 10, and the LNG pressurized by the boosting pump 31 may be still in a liquid state.

The high pressure pump 32 compresses the LNG discharged from the LNG storing tank 10 at a high pressure to supply the LNG to the engine 20 through the heat exchanger 40 to be described later. The LNG is discharged from the LNG storing tank 10 at a pressure of approximately 10 bar, and then is first pressurized by the boosting pump 31, and the high pressure pump 32 secondarily compresses the liquid-state LNG pressurized by the boosting pump 31 to supply the compressed LNG to the heat exchanger 40 to be described later.

In this case, the high pressure pump 32 compresses the LNG to have a pressure demanded by the engine 20, for example, 200 bar to 400 bar, to supply the compressed LNG to the engine 20, thereby enabling the engine 20 to generate driving force through the LNG.

Referring to FIG. 3, the high pressure pump 32 according to the embodiment of the present invention compresses the LNG in the liquid state B2 discharged from the boosting pump 31 at a high pressure, in such a manner that the high pressure pump 32 phase changes the LNG so that the LNG becomes supercritical state B3 having a higher temperature and a higher pressure than a critical point A1 represented in a general LNG phase change curve A.

However, in this case, the high pressure pump 32 needs to be driven for a long time in order to change the LNG in the liquid state B2 to the supercritical state B3, and thus heat permeation from the outside may be increased.

Further, the high pressure pump 32 according to the embodiment simultaneously compresses the LNG and increases the temperature of the LNG, so that electric energy injected in the high pressure pump 32 may be used for increasing the pressure of the LNG, and may also be used for increasing the temperature of the LNG, so that the amount of electric energy used may be increased. That is, since it is necessary to receive energy for increasing a pressure and energy for increasing a temperature from the high pressure pump 32 so that the LNG is phase changed from the liquid state B2 to the supercritical state B3, the amount of electric energy consumed, which needs to be supplied to the high pressure pump 32, is considerably increased, so that there is a problem in that efficiency of the high pressure pump 32 is considerably degraded.

In the meantime, referring to FIG. 4, the high pressure pump 32 according to another embodiment of the present invention compresses the liquid state LNG at a high pressure to change the LNG from the liquid state to a supercooled liquid state. Here, the supercooled liquid state of the LNG means that the pressure of the LNG is higher than a critical pressure, and the temperature of the LNG is lower than a critical temperature.

Particularly, the high pressure pump 32 compresses the LNG in the liquid state C2 discharged from the boosting pump 31 to have a high pressure up to 200 bar to 400 bar, in such a manner that the temperature of the LNG becomes lower than a temperature (critical temperature) of the critical point A1 represented in the general LNG phase change curve A, thereby phase changing the LNG to be in the supercooled liquid state C3. Here, the temperature of the LNG in the supercooled liquid state C3 may be -140°C to -60°C, which is relatively lower than the critical temperature.

In this case, the high pressure pump 32 changes the LNG in the liquid state C2 to be in the supercooled liquid state C3, so that the high pressure pump 32 does not need to be driven for a long time, thereby simultaneously decreasing an operation time and minimizing heat permeation from the outside. Further, in the LNG, which is phase changed from the liquid state C2 to the supercooled liquid state C3, the energy necessary for increasing a temperature is minimized or omitted compared to the embodiment of FIG. 3, the amount of electric energy consumed, which needs to be supplied to the high pressure pump 32, may be remarkably decreased compared to the embodiment represented in FIG. 3. Accordingly, the high pressure pump 32 according to the embodiment described with reference to FIG. 4 may secure higher efficiency than that of the high pressure pump 32 according to the embodiment described with reference to FIG. 3.

Accordingly, in the present embodiment, the LNG in the liquid state C1 is phase changed to the LNG in the supercooled liquid state C3 by pressurizing the LNG in the liquid state C1 stored in the LNG storing tank 10 to have the pressure demanded by the engine 20 by using the pump 30, thereby decreasing the amount of electric energy consumed of the pump 30.

The heat exchanger 40 heats the LNG and supplied the heated LNG to the engine. In this case, the heat exchanger 40 in the embodiment of the present invention increases only the temperature of the LNG without phase changing the LNG, but the heat exchanger 40 according to another embodiment of the present invention phase changes the LNG in the supercooled liquid state C3 to a supercritical state C4.

The heat exchanger 40 may be provided on the fuel supply line 21 between the engine 20 and the pump 30, and may heat the LNG while maintaining the LNG discharged from the pump 30 at the pressure of 200 bar to 400 bar.

The heat exchanger according to the embodiment heats the LNG in the supercritical state B3, increases only the temperature of the LNG, and then supplies the LNG to the engine 20, so that the heat exchanger 40 does not phase change the LNG.

In the meantime, the heat exchanger 40 according to another embodiment may phase change the LNG in the supercooled liquid state C3 to the LNG in the supercritical state C4 by heating the LNG in the supercooled liquid state C3.

Particularly, the heat exchanger 40 according to another embodiment may phase change the LNG in the supercooled liquid state C3 discharged from the pump 30 to the LNG in the supercritical state C4 by heating the LNG in the supercooled liquid state C3 to have a first predetermined temperature, for example, the first predetermined temperature is relatively higher than the temperature of the critical point A1 represented in the general LNG phase change curve A, and supply the phase-changed LNG to the engine 20. Here, the first predetermined temperature may be -60°C or higher, which is relatively higher than the temperature of the critical point A1 at the pressure of 200 bar to 400 bar, but is preferably 40°C to 60°C, which is a combustion temperature demanded by the engine 20. However, the temperature in the supercritical state C4 may be changed according to a temperature demanded by the engine 20.

The heat exchanger 40 may use exhausted gas of the engine, waste heat of a boiler or a power generator within the ship as a heat source for heating the LNG in the supercooled liquid state C3, and further use a specific chemical material for heating the LNG in the supercooled liquid state C3, so that the chemical material discharges heat and the LNG in the supercooled liquid state C3 receives the heat, thereby phase-changeing the LNG in the supercooled liquid state C3 to the LNG in the supercritical state C4.

In this case, the chemical material circulates a separate cycle to be heated by receiving heat by steam, and the like, and then supplies the received heat to the LNG in the supercooled liquid state C3, so that the LNG in the supercooled liquid state C3 may be smoothly phase changed to the LNG in the supercritical state C4. The chemical material may be glycol water and the like.

Referring to FIG. 4 again, when the heat exchanger 40 changes the LNG in the supercooled liquid state C3 to the LNG in the supercritical state C4, the LNG does not pass through a state in which gas and liquid coexist (a lower portion of the phase change curve A). The state in which gas and liquid coexist means a latent heat section, and the LNG in the latent heat section needs to absorb the considerable amount of heat for the phase change, so that the heat exchanger 40 may increase the amount of heat energy, which needs to be supplied to the LNG. However, in the present embodiment, the LNG has the temperature and the pressure demanded by the engine 10 by detouring the phase change curve A in an upper direction, so that the LNG does not pass through the latent heat section, thereby preventing heat energy from being excessively consumed.

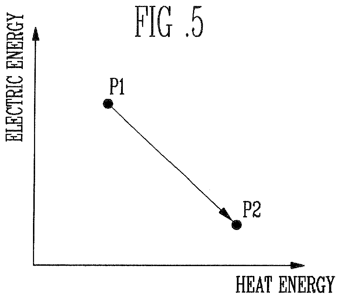

FIG. 5 is a graph for describing an energy use rate in the LNG fuel supply system according to another embodiment of the present invention.

Referring to FIGS. 3 and 4 again, a rise width of the temperature of the LNG by the heat exchanger 40 in the embodiment is smaller than a rise width of the temperature of the LNG by the heat exchanger 40 in another embodiment. Accordingly, the amount of heat energy demanded by the heat exchanger 40 in the embodiment may be lower than the amount of heat energy demanded by the heat exchanger 40 in another embodiment.

However, as illustrated in FIG. 5, in the embodiment P1, since the high pressure pump 32 demands the large amount of electric energy in a process of phase changing the LNG from the liquid state B2 to the supercritical state B3, the amount of electric energy used cannot help but being relatively larger than the amount of heat energy used. In this case, while the heat energy is an energy easily obtainable through surplus heat, such as exhaust gas of the engine in the ship, the electric energy is energy obtainable only when the power generator is driven by using fuel. Accordingly, compared to another embodiment, in the embodiment, even though the amount of heat energy used is small, the amount of electric energy used is relatively large, the embodiment is inefficient in terms of easiness of the obtainment of the electric energy and the heat energy.

In the meantime, in another embodiment P2, the high pressure pump 32 phase changes the LNG from the liquid state C2 to the supercooled liquid state C3, and then the heat exchanger 40 phase changes the LNG in the supercooled liquid state C3 to the supercritical state C4, so that it is possible to considerably decrease the amount of electric energy demanded by the high pressure pump 32. Accordingly, it can be seen that the amount of electric energy used is remarkably smaller than the amount of heat energy used. In this case, the heat energy demanded in the embodiment P2 may be larger than the heat energy demanded in the embodiment P1, but the heat energy is energy which is very easily obtainable through surplus heat of the ship as described above, so that it can be seen that the embodiment P2 is very efficient compared to the embodiment P1 in terms of an energy use rate.

Accordingly, in the present embodiment, the heat exchanger 40 phase changes the LNG from the supercooled liquid state C3 to the supercritical state C4 by using surplus heat, such as waste heat of the boiler and the power generator, generated from the ship as the heat source, so that it is possible to implement an environmentally-friendly system by decreasing a use of fuel for driving the power generator and the like and utilizing surplus heat by decreasing a use rate of the electric energy demanded by the pump 30 and increasing a use rate of the heat energy.

In the present embodiment, the LNG in the liquid state C1 stored in the LNG storing tank 10 is phase changed to the LNG in the supercooled liquid state C3 by pressurizing the LNG in the liquid state C1 to the pressure demanded by the engine 20 by using the pump 30, so that the energy transferred to the LNG by the pump 30 may be intensively used for increasing the pressure of the LNG, not for increasing the temperature of the LNG, thereby decreasing the amount of electric energy used for driving the pump 30.

Further, in the present embodiment, the LNG in the supercooled liquid state C3 is heated by using the heat exchanger 40, phase changed to the LNG in the supercritical state C4, and then supplied to the engine 20, so that it is possible to decrease a use rate of the electric energy and increase a use rate of heat energy easily obtainable in the ship.

Accordingly, in the present embodiment, it is possible to improve energy use efficiency of the ship by decreasing a use rate of electric energy and increasing a use rate of heat energy.

While the present invention has been shown and described with reference to certain embodiments thereof, it will be understood by those skilled in the art that various changes in form and details may be made therein without departing from the spirit and scope of the present invention as defined by the appended claims.

As described above, the embodiment has been disclosed in the drawings and the specification. The specific terms used herein are for purposes of illustration, and do not limit the scope of the present invention defined in the claims. Accordingly, those skilled in the art will appreciate that various modifications may be made without departing from the scope of the present invention. Therefore, the technical protection scope of the present invention will be defined by the accompanying claims.

## Claims

1. An LNG fuel supply system (1) for a ship, comprising:
a fuel supply line (21) connected from an LNG storing tank (10) to an engine (20);
a pump (30) provided on the fuel supply line, and configured to compress LNG discharged from the LNG storing tank at a high pressure; and
a heat exchanger (40) provided on the fuel supply line between the engine and the pump, and configured to heat the LNG supplied from the pump, wherein the pump (30) compresses the LNG at a higher pressure than a critical pressure to change the LNG in a liquid state to the LNG in a supercooled liquid state, wherein the heat exchanger (40) heats the LNG to a temperature demanded by the engine higher than a critical temperature without exchanging heat between the LNG and a boil-off gas to change the LNG in a supercooled liquid state to the LNG in a supercritical state, wherein the pump (30) and the heat exchanger (40) control the LNG to detour a latent heat section, such that the LNG does not pass through a state in which gas and liquid coexist.

2. The LNG fuel supply system of claim 1, wherein the pump (30) changes the LNG discharged from the LNG storing tank to the LNG in the supercooled liquid state having a higher pressure than a critical pressure and a lower temperature than a critical temperature.

3. The LNG fuel supply system of claim 1, wherein the pump (30) includes a high pressure pump (32) compressing the LNG discharged from the LNG storing tank (10) at 200 bar to 400 bar.

4. The LNG fuel supply system of claim 3, wherein the pump (30) further includes a boosting pump (31) provided on the fuel supply line between the LNG storing tank (10) and the high pressure pump (32), and configured to pressurize the LNG discharged from the LNG storing tank (10) and supply the pressurized LNG to the high pressure pump (32).

5. The LNG fuel supply system of claim 4, wherein the boosting pump (31) pressurizes the LNG discharged from the LNG storing tank at 1 bar to 25 bar.

6. The LNG fuel supply system of claim 3, wherein the heat exchanger (40) heats the LNG so that a temperature of the LNG reaches a first predetermined temperature while maintaining a pressure of the LNG discharged from the pump at 200 bar to 400 bar, and the first predetermined temperature is a temperature relatively higher than a critical temperature.

7. The LNG fuel supply system of claim 6, wherein the first predetermined temperature is a combustion temperature demanded by the engine.

8. The LNG fuel supply system of claim 6, wherein the first predetermined temperature is 40°C to 60°C.

## Patentansprüche

1. LNG-Kraftstoffversorgungssystem (1) für ein Schiff, umfassend:
eine Kraftstoffversorgungsleitung (21), die von einem LNG-Vorratsbehälter (10) aus mit einem Motor (20) verbunden ist;
eine Pumpe (30), die an der Kraftstoffversorgungsleitung vorgesehen ist und konfiguriert ist, um vom LNG-Vorratsbehälter abgeführtes LNG bei einem hohen Druck zu komprimieren; und
einen Wärmetauscher (40), der an der Kraftstoffversorgungsleitung zwischen dem Motor und der Pumpe vorgesehen ist und konfiguriert ist, um das von der Pumpe zugeführte LNG zu erwärmen,
wobei die Pumpe (30) das LNG bei einem höheren Druck als einem kritischen Druck komprimiert, um das LNG in einem flüssigen Zustand zum LNG in einem supergekühlten flüssigen Zustand zu ändern,
wobei der Wärmetauscher (40) das LNG auf eine durch den Motor geforderte Temperatur erwärmt, die höher als eine kritische Temperatur ist, ohne Wärme zwischen dem LNG und einem Verdampfungsgas auszutauschen, um das LNG in einem supergekühlten flüssigen Zustand zum LNG in einem superkritischen Zustand zu ändern,
wobei die Pumpe (30) und der Wärmetauscher (40) das LNG steuern, um einen latenten Wärmeabschnitt zu umgehen, so dass das LNG nicht einen Zustand durchläuft, in welchem Gas und Flüssigkeit gemeinsam existieren.

2. LNG-Kraftstoffversorgungssystem nach Anspruch 1, wobei die Pumpe (30) das vom LNG-Vorratsbehälter abgeführte LNG zum LNG im supergekühlten flüssigen Zustand mit einem höheren Druck als einem kritischen Druck und einer niedrigeren Temperatur als einer kritischen Temperatur ändert.

3. LNG-Kraftstoffversorgungssystem nach Anspruch 1, wobei die Pumpe (30) eine Hochdruckpumpe (32) enthält, die das vom LNG-Vorratsbehälter (10) abgeführte LNG bei 200 Bar bis 400 Bar komprimiert.

4. LNG-Kraftstoffversorgungssystem nach Anspruch 3, wobei die Pumpe (30) weiterhin eine Förderpumpe (31) enthält, die an der Kraftstoffversorgungsleitung zwischen dem LNG-Vorratsbehälter (10) und der Hochdruckpumpe (32) vorgesehen ist und konfiguriert ist, um das vom LNG-Vorratsbehälter (10) abgeführte LNG unter Druck zu versetzen und das unter Druck versetzte LNG zur Hochdruckpumpe (32) zuzuführen.

5. LNG-Kraftstoffversorgungssystem nach Anspruch 4, wobei die Förderpumpe (31) das vom LNG-Vorratsbehälter (10) abgeführte LNG bei 1 Bar bis 25 Bar unter Druck versetzt.

6. LNG-Kraftstoffversorgungssystem nach Anspruch 3, wobei der Wärmetauscher (40) das LNG so erwärmt, dass eine Temperatur des LNG eine erste vorbestimmte Temperatur erreicht, während ein Druck des von der Pumpe abgeführten LNG bei 200 Bar bis 400 Bar beibehalten wird, und die erste vorbestimmte Temperatur eine Temperatur ist, die relativ höher als ein kritische Temperatur ist.

7. LNG-Kraftstoffversorgungssystem nach Anspruch 6, wobei die erste vorbestimmte Temperatur eine durch den Motor geforderte Verbrennungstemperatur ist.

8. LNG-Kraftstoffversorgungssystem nach Anspruch 6, wobei die erste vorbestimmte Temperatur 40°C bis 60°C beträgt.

## Revendications

1. Un système (1) d'alimentation en carburant de gaz naturel liquéfié, GNL, pour un navire, comprenant :
une ligne (21) d'alimentation en carburant, reliant un réservoir (10) de stockage de GNL à un moteur (20) ;
une pompe (30) située sur la ligne d'alimentation en carburant et configurée pour comprimer le GNL déchargé à haute pression depuis le réservoir de stockage de GNL ; et
un échangeur de chaleur (40) situé sur la ligne d'alimentation en carburant entre le moteur et la pompe, et configuré pour chauffer le GNL fourni par la pompe,
la pompe (30) comprimant le GNL à une pression plus élevée qu'une pression critique de façon à modifier le GNL dans un état liquide en du GNL dans un état liquide super-refroidi,
l'échangeur de chaleur (40) chauffant le GNL à une température requise par le moteur, supérieure à une température critique sans échange de chaleur entre le GNL et un gaz d'ébullition, de façon à modifier le GNL dans un état liquide super-refroidi en du GNL dans un état supercritique,
la pompe (30) et l'échangeur de chaleur (40) commandant le GNL de façon qu'il soit dévié par rapport à une portion à chaleur latente, de sorte que le GNL ne passe pas dans un état dans lequel le gaz et le liquide coexistent.

2. Le système d'alimentation en carburant GNL selon la revendication 1, dans lequel la pompe (30) modifie le GNL déchargé du réservoir de stockage de GNL en du GNL dans l'état liquide super-refroidi ayant une pression plus élevée qu'une pression critique et une température inférieure à une température critique.

3. Le système d'alimentation en carburant GNL selon la revendication 1, dans lequel la pompe (30) comprend une pompe à haute pression (32) comprimant le GNL déchargé depuis le réservoir (10) de stockage de GNL de 200 bars à 400 bars.

4. Le système d'alimentation en carburant GNL selon la revendication 3, dans lequel la pompe (30) comprend en outre une pompe d'amplification (31) située sur la ligne d'alimentation en carburant entre le réservoir de stockage de GNL (10) et la pompe à haute pression (32), et configurée pour pressuriser le GNL déchargé du réservoir (10) de stockage de GNL et fournir le GNL pressurisé à la pompe haute pression (32).

5. Le système d'alimentation en carburant GNL selon la revendication 4, dans lequel la pompe d'amplification (31) pressurise à 25 bars le GNL déchargé du réservoir de stockage de GNL à 1 bar.

6. Le système d'alimentation en carburant GNL selon la revendication 3, dans lequel l'échangeur de chaleur (40) chauffe le GNL de sorte qu'une température du GNL atteint une première température prédéterminée tout en maintenant à 400 bars une pression du GNL déchargé de la pompe à 200 bars, et la première température prédéterminée est une température relativement supérieure à une température critique.

7. Le système d'alimentation en carburant GNL selon la revendication 6, dans lequel la première température prédéterminée est une température de combustion requise par le moteur.

8. Le système d'alimentation en carburant GNL selon la revendication 6, dans lequel la première température prédéterminée va de 40°C à 60°C.
